# EUROPÄISCHE PATENTSCHRIFT

(11) **EP 1 013 789 B1**
(45) Veröffentlichungstag und Bekanntmachung des Hinweises auf die Patenterteilung: **14.05.2003**
(21) Anmeldenummer: 99811167.8
(22) Anmeldetag: 16.12.1999
(51) Int. Cl.: C23C 4/00, F01D 5/28, F01D 5/18

(54) **Verfahren zum Unschädlichmachen von beim Beschichten mit einer Schutzschicht entstehenden Verengungen in den Kühllöchern von gasgekühlten Teilen**
Method for preventing closure of cooling holes in hollow air-cooled turbine engine products during application of a coating
Procédé pour empêcher la fermeture de trous de refroidissement situés dans des composants creux de turbomoteurs refroidis par air durant l'application d'une couche

(30) Priorität: 23.12.1998 DE 19859763
(43) Veröffentlichungstag der Anmeldung: 28.06.2000
(73) Patentinhaber: ALSTOM (Switzerland) Ltd, 5401 Baden (CH)
(72) Erfinder: Beeck, Alexander, Dr., 79790 Küssaberg (DE)

(56) Entgegenhaltungen:
- EP-A- 0 807 744

## Beschreibung

### TECHNISCHES GEBIET

Die vorliegende Erfindung bezieht sich auf das Gebiet der Technik von thermischen Maschinen. Sie betrifft ein Verfahren zum Unschädlichmachen von Verengungen in den Kühllöchern von gasgekühlten Teilen, insbesondere von Gasturbinen und/oder Brennern, welche Verengungen dadurch entstehen, dass die Wände der gasgekühlten Teile, durch welche die Kühllöcher hindurchgehen und welche auf ihrer Aussenseite mit einer schützenden ersten Beschichtung bedeckt sind, im Verlauf einer Ueberholung mit einer zweiten, erneuerten Beschichtung versehen werden, und sich dabei Beschichtungsmaterial in den Kühllöchern ablagert.

Ein solches Verfahren, bei dem die Verengungen athermisch mittels eines gepulsten UV-Laserstrahls aus den Kühllöchern entfernt werden, ist aus der US-A-5,216,808 bekannt.

### STAND DER TECHNIK

Die Beschichtung von thermisch belasteten Teilen von Gasturbinen oder Brennern, die zur Kühlung in ihren Wänden mit Kühllöchern für die Gas- bzw. Luftkühlung ausgestattet sind, kann üblicherweise nicht ohne weiteres durch "overlay coating" und/oder "thermal barrier coating" TBC erneuert werden, weil die Kühllöcher durch die erneute Beschichtung zumindest teilweise verschlossen bzw. verengt werden und damit die Kühlwirkung verändert und/oder beeinträchtigt wird. Dies gilt insbesondere für den Fall, dass die Kühllöcher nach der ursprünglichen Beschichtung in die Wand eingebracht worden sind.

Es sind daher im Stand der Technik verschiedene Lösungen angegeben worden, um die beim Beschichten von mit Kühllöchern versehenen Teilen entstehenden Verengungen unschädlich zu machen. Eine Art von Lösung besteht darin, Massnahmen zu treffen, dass die Verengungen gar nicht erst entstehen können. Hierzu werden vor dem Beschichten die Kühllöcher verschlossen bzw. gefüllt. Durch die Füllung der Kühllöcher kann kein Beschichtungsmaterial in die Löcher eindringen. Nach Abschluss des Beschichtungsvorgangs wird die Füllung wieder aus den Kühllöchern entfernt und die Kühllöcher stehen mit ihrem ursprünglichen Durchgangsquerschnitt zur Verfügung. Derartige Techniken sind z.B. in der US-A-4,743,462 oder aus der US-A-5,800,695 bekannt.

Eine andere Art von Lösung besteht darin, die Kühllöcher offen zulassen und die beim Beschichten entstehenden Verengungen in den Löchern nach dem Beschichten zu entfernen. Dies kann - wie in der eingangs genannten US-A-5,216,808 beschrieben - mittels eines Laserstrahls geschehen. Es ist aber auch denkbar, die Verengungen dadurch zu beseitigen, dass eine Schleifflüssigkeit durch die Kühllöcher gedrückt wird (US-A-5,702,288) und so die Verengungen abträgt.

Nachteilig ist bei diesen Verfahren, dass die einzelnen Kühllöcher sorgfältig verschlossen und anschliessend wieder freigelegt bzw. sorgfältig von der Verengung befreit werden müssen, damit die ursprünglich beabsichtigte Kühlwirkung an allen Stellen des gekühlten Teils voll erhalten bleibt und es nicht zu lokalen Ueberhitzungen aufgrund mangelhaft beseitigter Verengungen kommt. Bei Teilen, die mit einer grossen Anzahl von fein verteilten Kühllöchern ausgestattet sind, führt dies zu einem erheblichen Aufwand bei der Bearbeitung.

### DARSTELLUNG DER ERFINDUNG

Es ist daher Aufgabe der Erfindung, ein Verfahren der eingangs genannten Art zu schaffen, bei dem auf einfache Weise und ohne aufwendige Auffüll- oder Abtragschritte beim erneuten Beschichten der Teile der Durchgangsquerschnitt der einzelnen Kühllöcher praktisch konstant gehalten werden kann.

Die Aufgabe wird durch die Gesamtheit der Merkmale des Anspruchs 1 gelöst.

Der Kern der Erfindung besteht darin, die Verengungen der Kühllöcher durch die erneute Beschichtung bewusst zuzulassen. Der konstante Durchgangsquerschnitt der Kühllöcher wird dabei dadurch erreicht, dass Kühllöcher mit einem grösseren als dem benötigten Durchgangsquerschnitt verwendet werden, und der gewünschte Durchgangsquerschnitt durch eine künstliche Verengung eingestellt wird. Verengen sich die Kühllöcher anschliessend bei der Nachbeschichtung durch Ablagerung des Beschichtungsmaterials, wird die künstliche Verengung entfernt. Da die künstliche Verengung so gewählt wird, dass sie der bei der Nachbeschichtung entstehenden Verengung entspricht, bleibt der Durchgangsquerschnitt der Kühllöcher auch nach der Nachbeschichtung erhalten.

Eine bevorzugte Ausführungsform des Verfahrens nach der Erfindung ist dadurch gekennzeichnet, dass die ersten Mittel erste Einsätze umfassen, welche an den Innenseiten der Wände abdeckend anliegen und erste Oeffnungen aufweisen, die jeweils den einzelnen Kühllöchern zugeordnet sind und diese Kühllöcher verengen. Durch solche vorfabrizierbaren Einsätze können alle Kühllöcher auf einfache Weise gleichzeitig und gleichmässig verengt werden.

Bei einer bevorzugten Weiterbildung dieser Ausführungsform werden die ersten Einsätze nach der Ueberholung ersatzlos weggelassen. Hierdurch können die künstlichen Verengungen auf besonders einfache Weise entfernt werden.

Wenn dagegen den Einsätzen eine bleibende Funktion innerhalb des Teils zukommt, ist es vorteilhaft, gemäss einer anderen Weiterbildung der Ausführungsform die ersten Einsätze nach der Ueberholung durch zweite Einsätze mit zweiten gegenüber den ersten vergrösserten Oeffnungen zu ersetzen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer Querschnittsdarstellung einen Ausschnitt aus der Wand eines gasgekühlten Teils mit einem beispielhaften Kühlloch mit vergrössertem Durchgangsquerschnitt und einer ersten (ursprünglichen) Beschichtung, wie es für die Durchführung des erfindungsgemässen Verfahrens benötigt wird;
- Fig. 2: das Teil aus Fig. 1 mit der künstlichen Verengung des Kühllochs gemäss einem bevorzugten Ausführungsbeispiel der Erfindung durch einen von innen an der Wand anliegenden ersten Einsatz, der für jedes Kühlloch mit einer verengenden ersten Oeffnung ausgestattet ist;
- Fig. 3: das Teil aus Fig. 1 nach der Nachbeschichtung mit der durch die Nachbeschichtung verursachten Verengung des Kühlloches; der erste Einsatz ist weggelassen; und
- Fig. 4: das Teil aus Fig. 1 nach der Nachbeschichtung mit der durch die Nachbeschichtung verursachten Verengung des Kühlloches; der erste Einsatz ist alternativ zu Fig. 3 durch einen zweiten Einsatz ersetzt, der für jedes Kühlloch mit einer nicht weiter verengenden zweiten Oeffnung ausgestattet ist.

### WEGE ZUR AUSFÜHRUNG DER ERFINDUNG

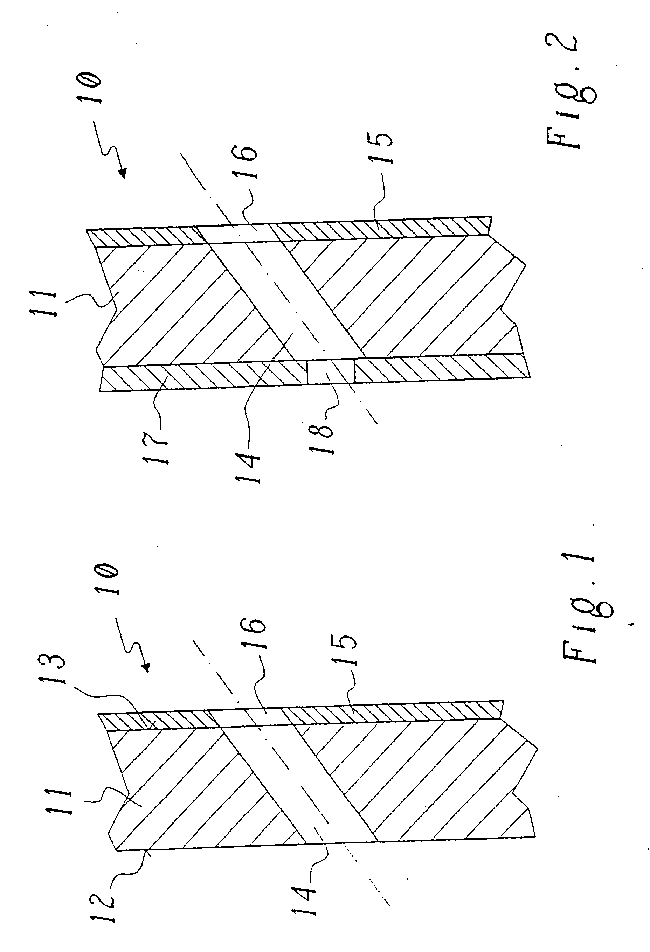

Das erfindungsgemässe Verfahren geht aus von einem Teil (Turbinenschaufel oder dgl.), wie es in verallgemeinerter Form ausschnittweise im Querschnitt in Fig. 1 wiedergegeben ist. Das gas- bzw. luftgekühlte Teil 10 umfasst eine Wand 11 mit einer Innenseite 12 und einer Aussenseite 13. In der Wand 11 ist eine Vielzahl von Kühllöchern 14 vorgesehen, von denen eines in der Figur stellvertretend wiedergegeben ist. Die Kühllöcher 14 können senkrecht durch die Wand 11 verlaufen; oder - wie in Fig. 1 gezeigt - in einem schrägen Winkel dazu. Auf der Aussenseite 13 ist die Wand mit einer ersten, ursprünglichen Beschichtung 15 versehen, die auf herkömmliche Weise (z.B. Plasmasprühen) erzeugt worden ist und aus an sich bekannten Materialien (z.B. einem Aluminid) bestehen kann. Die erste Beschichtung 15 ist im Bereich der Kühllöcher 14 jeweils mit einer Oeffnung 16 versehen, die im Querschnitt den Kühllöchern angepasst ist. Dies kann beispielsweise dadurch erreicht werden, dass die Kühllöcher 14 erst nach dem Aufbringen der ersten Beschichtung 15 in die Wand 11 gebohrt werden.

Der Innendurchmesser der Kühllöcher 14 bzw. ihr Durchgangsquerschnitt ist von vornherein grösser gewählt als es für den beabsichtigten Kühlungseffekt nötig ist. Um den tatsächlich benötigten Querschnitt zu erreichen, wird gemäss Fig. 2 auf der Innenseite 12 der Wand 11 ein Einsatz 17 angeordnet, der die Innenseite 12 der Wand 11 abdeckt und nur im Bereich der Kühllöcher 14 jeweils eine Oeffnung 18 aufweist, die im Durchgangsquerschnitt bzw. Durchmesser kleiner gewählt ist als das Kühlloch 14 und so für das Kühlloch 14 ein künstliche Verengung darstellt. Durch die künstliche Verengung wird die Strömung des Kühlmediums durch das Kühlloch 14 beschränkt. Durchgangsquerschnitt bzw. Durchmesser der Oeffnungen 18 werden dabei so gewählt, dass die künstliche Verengung in gleicher Weise wirkt, wie die später bei der Nachbeschichtung entstehende Verengung durch Materialablagerung.

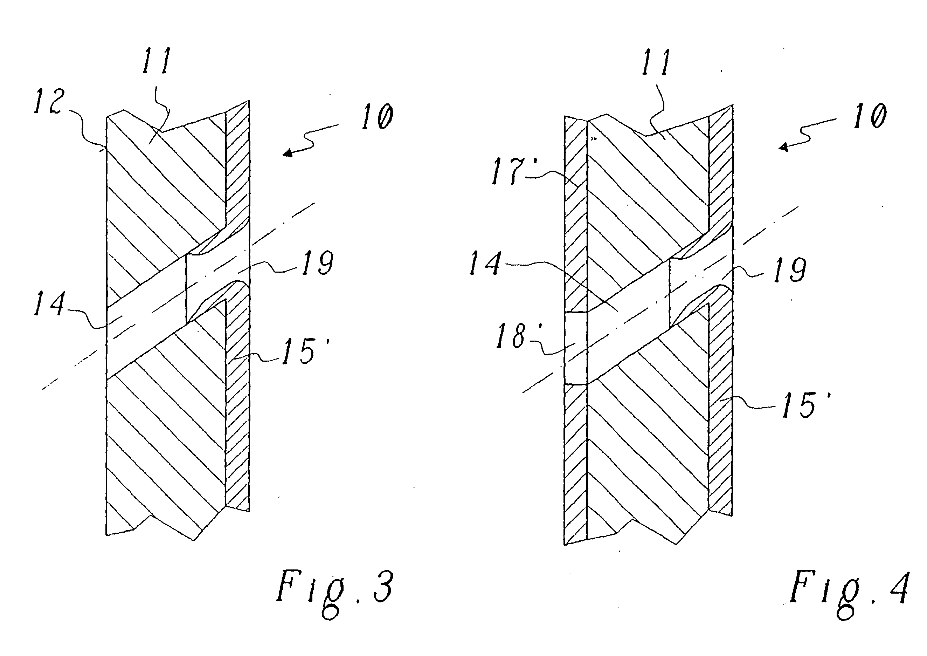

Wird auf der Aussenseite der Wand 11 - wie in Fig. 3 gezeigt - im Rahmen einer Nachbeschichtung eine weitere Beschichtung 15' aufgebracht, lagert sich im Auslassbereich des ungeschützten Kühlloches 14 Beschichtungsmaterial ab und bildet eine Verengung 19. Wenn nun der erste Einsatz 17 aus Fig. 2 mit den verengenden Oeffnungen 18 entfernt wird (Fig. 3), wird die durch die Oeffnung 18 erzeugte künstliche Verengung des jeweiligen Kühlloches in äquivalenter Weise durch die Verengung 19 ersetzt, so dass die Strömungsverhältnisse im Kühlloch 14 praktisch unverändert bleiben. Hierdurch entfällt die Notwendigkeit, die durch Ablagerung hervorgerufene Verengung 19 in irgendeiner Weise zu verhindern oder im Nachhinein zu entfernen. Die Verwendung des Einsatzes 17 hat den Vorteil, dass mit einem einzigen vorfabrizierbaren Teil alle Kühllöcher gleichzeitig und gleichmässig verengt, und die Verengung anschliessend auch gleichzeitig wieder aufgehoben werden kann. Grundsätzlich ist es aber auch denkbar, unter Inkaufnahme eines Mehraufwandes die Kühllöcher einzeln künstlich zu verengen.

Ist der Einsatz 17 ein funktioneller Bestandteil des Teils 10, ist es zweckmässig, ihn - wie in Fig. 4 gezeigt - nach der Nachbeschichtung durch einen zweiten Einsatz 17' zu ersetzen, bei dem die verengenden Löcher 18 durch grössere, nicht verengende Löcher 18' ersetzt sind.

### BEZUGSZEICHENLISTE

- 10: gasgekühltes Teil
- 11: Wand
- 12: Innenseite (Wand)
- 13: Aussenseite (Wand)
- 14: Kühlloch
- 15, 15': Beschichtung
- 16: Oeffnung (Beschichtung)
- 17,17': Einsatz
- 18,18': Oeffnung (Einsatz)
- 19: Verengung

## Patentansprüche

1. Verfahren zum Unschädlichmachen von Verengungen (19) in den Kühllöchern (14) von gasgekühlten Teilen (10), insbesondere von Gasturbinen und/oder Brennern, welche Verengungen (19) dadurch entstehen, dass die Wände (11) der gasgekühlten Teile (10), durch welche die Kühllöcher (14) hindurchgehen und welche auf ihrer Aussenseite (13) mit einer schützenden ersten Beschichtung (15) bedeckt sind, im Verlauf einer Ueberholung mit einer zweiten, erneuerten Beschichtung (15') versehen werden, und sich dabei Beschichtungsmaterial in den Kühllöchern (14) ablagert, **dadurch gekennzeichnet, dass** vor der Ueberholung die Kühllöcher (14) durch erste Mittel (17, 18) soweit verengt werden, wie es in etwa den späteren, im Zuge der zweiten Beschichtung (15') entstehenden Verengungen (19) entspricht, und dass die ersten Mittel (17, 18) nach der Ueberholung entfernt werden.

2. Verfahren nach Anspruch 1, **dadurch gekennzeichnet, dass** die ersten Mittel erste Einsätze (17) umfassen, welche an den Innenseiten (12) der Wände (11) abdeckend anliegen und erste Oeffnungen (18) aufweisen, die jeweils den einzelnen Kühllöchern (14) zugeordnet sind und diese Kühllöcher (14) verengen.

3. Verfahren nach Anspruch 2, **dadurch gekennzeichnet, dass** die ersten Einsätze (17) nach der Ueberholung ersatzlos weggelassen werden.

4. Verfahren nach Anspruch 2, **dadurch gekennzeichnet, dass** die ersten Einsätze (17) nach der Ueberholung durch zweite Einsätze (17') mit zweiten gegenüber den ersten vergrösserten Oeffnungen (18') ersetzt werden.

## Claims

1. Method for rendering narrowings (19) in the cooling holes (14) of gas-cooled parts (10), in particular of gas turbines and/or burners, harmless, the said narrowings (19) occurring due to the fact that the walls (11) of the gas-cooled part (10), through which the cooling holes (14) pass and which are covered on their outside (13) with a protective first coating (15), are provided with a second renewed coating (15') in the course of an overhaul, coating material at the same time being deposited in the cooling holes (14), **characterized in that**, before the overhaul, the cooling holes (14) are narrowed by first means (17, 18) to an extent such as corresponds approximately to the later narrowings (19) occurring during the second coating (15'), and **in that** the first means (17, 18) are removed after the overhaul.

2. Method according to Claim 1, **characterized in that** the first means comprise first inserts (17) which bear in a covering manner on the insides (12) of the walls (11) and which have first orifices (18) which in each case are assigned to the individual cooling holes (14) and narrow these cooling holes (14).

3. Method according to Claim 2, **characterized in that** the first inserts (17) are omitted, without being replaced, after the overhaul.

4. Method according to Claim 2, **characterized in that**, after the overhaul, the first inserts (17) are replaced by second inserts (17') with second orifices (18') enlarged in relation to the first.

## Revendications

1. Procédé pour empêcher des rétrécissements (19) dans les trous de refroidissement (14) de pièces (10) à refroidissement à gaz, en particulier de turbines à gaz et/ou de brûleurs, lesquels rétrécissements (19) se produisent du fait que les parois (11) des pièces (10) à refroidissement à gaz, à travers lesquelles passent les trous de refroidissement (14) et qui sont recouvertes sur leur côté extérieur (13) d'un premier revêtement protecteur (15), sont pourvus au cours d'un reconditionnement d'un deuxième nouveau revêtement (15'), et que dans ce cas du matériau de revêtement se dépose dans les trous de refroidissement (14), **caractérisé en ce qu'**avant le reconditionnement, les trous de refroidissement (14) sont rétrécis par des premiers moyens (17, 18) dans une mesure correspondant à peu près aux rétrécissements (19) se produisant ultérieurement au cours du deuxième revêtement (15'), et **en ce que** les premiers moyens (17, 18) sont enlevés après le reconditionnement.

2. Procédé selon la revendication 1, **caractérisé en ce que** les premiers moyens comprennent des premiers inserts (17) qui s'appliquent contre les côtés intérieurs (12) des parois (11) en les recouvrant et qui présentent des premières ouvertures (18) qui sont associées respectivement aux trous de refroidissement individuels (14) et qui rétrécissent ces trous de refroidissement (14).

3. Procédé selon la revendication 2, **caractérisé en ce que** les premiers inserts (17) sont enlevés sans remplacement après le reconditionnement.

4. Procédé selon la revendication 2, **caractérisé en ce que** les premiers inserts (17) sont remplacés après le reconditionnement par des deuxièmes inserts (17') avec des deuxièmes ouvertures (18') agrandies par rapport aux premières ouvertures.
